Europäisches Patentamt

European Patent Office

Office européen des brevets

(19)

(11) Numéro de publication: **0 246 695**
**B1**

(12) # FASCICULE DE BREVET EUROPEEN

(45) Date de publication du fascicule du brevet: **16.08.90**

(51) Int. Cl.⁵: **C 02 F 3/08, B 01 J 19/18**

(21) Numéro de dépôt: **87200871.9**

(22) Date de dépôt: **12.05.87**

(54) **Profilé en matière synthétique pour la réalisation des rotofiltres biologiques des installations d'épuration.**

(30) Priorité: **20.05.86 IT 8555486**

(43) Date de publication de la demande:
**25.11.87 Bulletin 87/48**

(45) Mention de la délivrance du brevet:
**16.08.90 Bulletin 90/33**

(84) Etats contractants désignés:
**AT BE CH DE ES FR GB GR IT LI LU NL SE**

(56) Documents cités:
**EP-A-0 168 049**
**FR-A-2 012 610**
**FR-A-2 410 496**

(73) Titulaire: **Meneghetti, Giuseppe**
**Via Torino, 4**
**I-36040 Marola di Torri di Quartesolo (IT)**

(72) Inventeur: **Meneghetti, Giuseppe**
**Via Torino, 4**
**I-36040 Marola di Torri di Quartesolo (IT)**

(74) Mandataire: **Bettello, Luigi, Dott. Ing.**
**Via Col d'Echele, 25**
**I-36100 Vicenza (IT)**

Courier Press, Leamington Spa, England.

# Description

On sait que pour l'épuration des eaux résiduaires on utilise à l'heure actuelle des appareils tournants de mise en contact biologique comprenant généralement une série d'éléments tubulaires qui sont assemblés en faisceaux et qui sont disposés suivant des cercles concentriques en étant retenus par des rubans de maintien circonférenciels, afin de pouvoir tourner avec un arbre horizontal et de pénétrer et sortir alternativement d'un bassin de décantation à l'intérieur duquel circule le liquide à épurer.

On a pu constater que la croissance biologique visqueuse commence à se développer par secteurs en utilisant comme source d'alimentation le carbone organique contenu dans le liquide à traiter. Dès que cette croissance biologique augmente jusqu'à atteindre la valeur de quelques millimètres, on vérifie que les substances en suspension se détachent des secteurs sus-mentionnés et précipitent au fond sous forme de boues. Une nouvelle bio-croissance peut alors intervenir et le cycle se répète.

L'un des buts de la présente invention est de réaliser des éléments profilés en matière synthétique, notamment en polychrorure de vinyl rigide, qui sont munis de moyens pour l'assemblage à des profilés adjacents similaires, de façon à permettre la réalisation d'une bande flexible continue de longueur indéfinie, susceptible d'être enroulée en spirale jusqu'à atteindre les dimensions désirées pour le diamètre total du tambour d'un roto-filtre, lequel est partiellement immergé dans le liquide d'un bassin afin d'obtenir le résultat désiré.

Le profilé présente un dessin particulier qui permet d'augmenter la surface utile de contact par rapport au volume de l'ensemble en améliorant ainsi le rendement. On notera que le poids unitaire d'un ensemble reste très réduit.

Le profilé suivant l'invention est défini à la revendication unique.

Le dessin annexé, donné à titre d'exemple, permettra de mieux comprendre l'invention, les caractéristiques qu'elle présente et les avantages qu'elle est susceptible de procurer:

Fig. 1 montre en perspective un élément profilé établi conformément à l'invention.

Fig. 2 montre deux éléments profilés identiques mutuellement assemblés.

Fig. 3 est une vue de côté d'un roto-filtre réalisé à l'aide de profilés suivant l'invention.

Fig. 4 est une vue en élévation du roto-filtre suivant fig. 3.

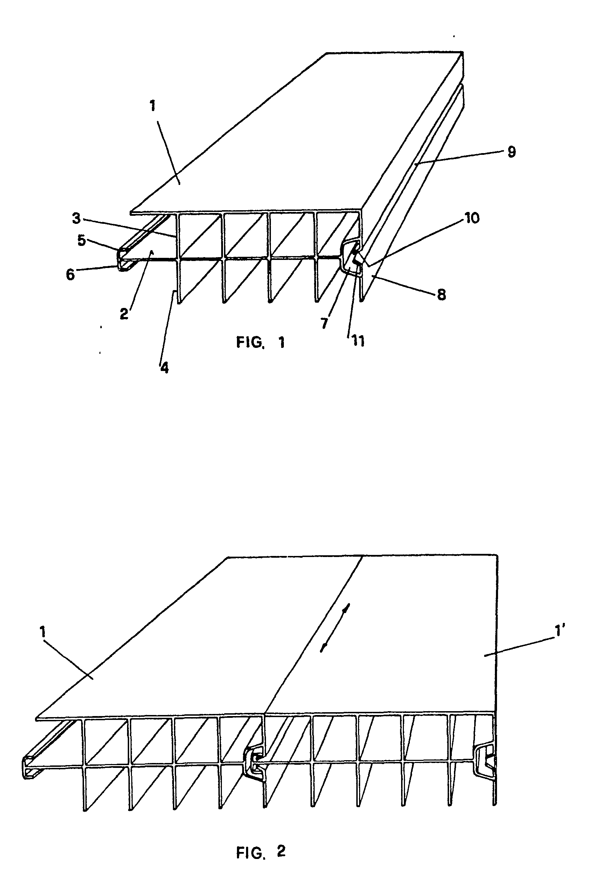

Le profilé suivant l'invention tel que représenté en fig. 1 comporte deux parois parallèles 1 et 2 qui sont réunies l'une à l'autre par des cloisons intermédiaires 3, lesquelles s'étendent au-delà de la paroi 2 pour constituer des prolongements 4 orientés parallèlement les uns aux autres.

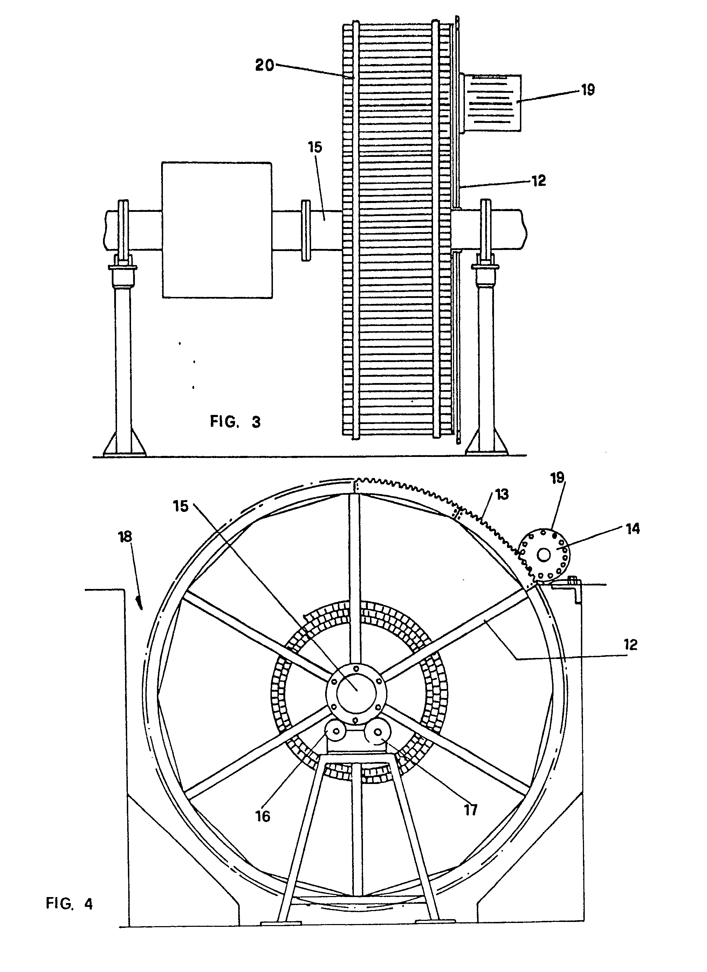

Au niveau de l'un de ses bords longitudinaux, la paroi filtrante 2 est pourvue de deux ailettes 5 et 6 qui sont repliées sur elles-mêmes et qui sont orientées perpendiculairement à ladite paroi 2 afin de définir un profil en forme de T formant organe d'accrochage. Ce profil est susceptible d'être engagé à l'intérieur d'une rainure 7 prévue en arrière de la facette opposée 8 d'un profilé identique; la rainure 7 communique avec l'extérieur à travers une fente longitudinale 9 de manière à permettre le passage du bord de la paroi 2 du profilé adjacent, les ailettes 5 et 6 venant s'accrocher dans la rainure 7 aux ailettes 10 et 11 qui constituent les bords de la fente 9 qui sont retournés vers l'intérieur, le tout comme montré en fig. 2.

On comprend que lorsque deux profilés identiques 1 et 1' ont été accrochés moyennant un déplacement longitudinal réciproque, il n'est plus possible de les détacher, mais il subsiste la possibilité d'un déplacement angulaire d'un profilé par rapport à l'autre de quelques degrés, si bien qu'on peut réaliser une bande continue de longueur indéfinie formée de plusieurs profilés accrochés les uns aux autres. Une telle bande peut être enroulée en spirale en formant une série de spires autour d'un noyau central jusqu'à atteindre le diamètre désiré pour le roto-filtre à obtenir.

De manière avantageuse la spirale sera délimitée sur un côté par une roue à rayons 12 (fig. 3 et 4) qui sur son bord extérieur comporte une denture 13 coopérant avec un mécanisme denté de commande 14 actionné par un moto-réducteur en vue d'assurer l'entraînement de l'ensemble sur un arbre central 15, en étant soutenu par des galets porteurs 16 et 17. L'ensemble est propre à être partiellement immergé à l'intérieur d'un bassin tel que 18.

Il suffit de prévoir un simple lien circonférenciel 20 pour interdire tout déroulement intempestif de la spirale.

On conçoit qu'on peut monter sur le même arbre tournant 15 plusieurs spirales parallèles, en fonction de la longueur total du bassin 18, ces spirales étant entraînées par un moto-réducteur 19 unique.

On notera que les parois 1 et 2 définissent, avec les cloisons 3 et les prolongements 4, des alvéoles à section pratiquement carrée. Les dimensions de ces alvéoles peuvent varier dans une large mesure, mais il semble que la valeur optimale soit de 20×20 mm. La croissance biologique visqueuse qui se forme sur les surfaces internes des éléments constituant la spirale du roto-filtre permet la retenue des substances organiques solubles au niveau de la surface cellulaire, la transformation subséquente de ces substances assurant l'épuration du liquide à traiter.

# Revendication

Profilé en matière synthétique pour la réalisation d'un moto-filtre biologique destiné à une installation d'épuration, caractérisé en ce qu'il présente une série d'alvéoles à profil pratiquement carré qui sont délimités par deux parois planes (1, 2) et par des cloisons perpendiculaires (3, 4) tandis que l'un de ses bords comporte une facette (8) qui est découpée d'une fente (9) permettant l'accrochage des ailettes (5, 6) ménagées sur le bord opposé d'un profilé identique adjacent, afin de permettre la réalisation d'une bande flexible continue formée par des profilés assemblés les uns aux autres et susceptible d'être enroulés en spirale autour d'un noyau central cylindrique jusqu'à former le corps du roto-filtre.

## Patentanspruch

Profilstück aus Kunststoff zur Herstellung eines biologischen Filters in Rotorform in einer Reinigungsanlage, dadurch gekennzeichnet, daß das Profilstück eine Reihe von Zellen praktisch quadratischen Querschnittes aufweist, von welche eine jede von zwei ebenen Wänden (1, 2) und hierzu senkrecht stehenden Trennwänden (3, 4) begrenzt ist, während einer ihrer Ränder eine von einem Spalt (9) unterbrochene Fläche (8) aufweist, welcher das Einhängen von Flügeln (5, 6) erlaubt, die am gegenüberliegenden Rand eines identischen, benachbarten Profilstückes vorgesehen sind derart, daß durch die aneinandergefügten Profilstücke ein kontinuierliches, flexibles Band gebildet ist, welches zum Zwecke der Bildung des Kerns des Filters in Rotorform spiralförmig um einen zentralen, zylinderförmigen Kern wickelbar ist.

## Claim

Profile made from synthetic material for a motorized biological filter intended for a purification installation, characterized by the fact that it has a series of cells of practically square cross-section, which are demarcated by two plane walls (1, 2) and by perpendicular partitions (3, 4), one of its edges comprising a face (8) along which there is a longitudinal recess (9) in which the blades (5, 6) of an adjacent identical profile are able to engage, so that it is possible to construct a continuous, flexible band made up of profiles assembled together and capable of being wound in a roll around a central cylindrical core in order to make up the body of the rotary filter.

EP 0 246 695 B1

FIG. 1

FIG. 2

1

FIG. 3

FIG. 4